# EUROPÄISCHE PATENTSCHRIFT

(11) **EP 2 479 353 B1**
(45) Veröffentlichungstag und Bekanntmachung des Hinweises auf die Patenterteilung: **04.11.2020**
(21) Anmeldenummer: 12151057.2
(22) Anmeldetag: 13.01.2012
(51) Int. Cl.: E03C 1/264, A47K 3/02, A47K 1/14, E03C 1/29, A47K 3/40, E03F 5/04, F16D 13/75

(54) **Sanitärwanne**
Sanitary basin
Cuve sanitaire

(30) Priorität: 21.01.2011 DE 102011000275
(43) Veröffentlichungstag der Anmeldung: 25.07.2012
(73) Patentinhaber: Franz Kaldewei GmbH & Co. KG, 59229 Ahlen (DE)
(72) Erfinder:
(74) Vertreter: Lorenz, Bernd Ingo Thaddeus

(56) Entgegenhaltungen:
- EP-A2- 1 243 709
- WO-A1-2007/070956
- DE-A1- 4 032 405
- DE-A1-102007 022 250
- DE-B3-102005 011 790
- DE-U- 7 134 267
- DE-U1-202005 017 965
- GB-A- 1 591 369
- US-B1- 6 170 095

## Beschreibung

Die Erfindung betrifft eine Sanitärwanne mit einer in einer Vertiefung des Wannenbodens angeordneten Ablauföffnung gemäss dem Oberbegriff des Ansprüche 1, 4 und 10.

Das Metallelement bildet die für einen Benutzer sichtbare Abdeckung des Ablaufes und kann aufgrund der an die Vertiefung angepassten Form in die Vertiefung hineingesetzt werden, so dass das Metallelement vorzugsweise nur geringfügig von dem an die Vertiefung anschließenden Bereich des Wannenbodens hervorsteht. Besonders bevorzugt ist das Metallelement als oberste Abdeckung des Ablaufes flächenbündig zu dem an die Vertiefung angrenzenden Bereich des Wannenbodens.

Dadurch, dass das Metallelement in die Vertiefung eingesetzt und vorzugsweise flächenbündig mit dem angrenzenden Bereich des Wannenbodens ist, ist der Ablauf optimal in den Wannenboden integriert. Von dem gesamten Ablauf ist lediglich der für den Wasserabfluss verbleibende Spalt sichtbar. Ansonsten kann eine durchgehende Fläche bereitgestellt werden. Der Ablauf wird so von einem Benutzer auch nicht als störend empfunden, wenn dieser bei einer Duschwanne auf dem Metallelement steht oder bei einer Badewanne auf dem Metallelement sitzt oder liegt. Eine gattungsgemäße Sanitärwanne zeichnet sich durch ein sehr ästhetisches, ansprechendes Erscheinungsbild aus.

Aus der Praxis sind Sanitärwannen aus Sanitär-Acryl und Stahl-Emaille bekannt, wobei sich Stahl-Emaille durch eine hohe Kratz-, Abrieb- und Schlagfestigkeit auszeichnet. Stahl-Emaille ist des Weiteren hygienisch und schmutzabweisend und kann leicht gereinigt werden. Schließlich bleibt das hochwertige Erscheinungsbild von Stahl-Emaille langfristig erhalten, wobei auch unter Einwirkung chemischer Substanzen und Hitze keine Farb- oder Oberflächen-änderungen auftreten. Gerade bei Sanitärwannen aus Stahl-Emaille besteht entsprechend das Bedürfnis im Ablaufbereich ein hochwertiges Material vorzusehen, weshalb das zuvor beschriebene Metallelement insbesondere auch aus hochwertigem Stahl-Emaille gebildet sein kann.

Auch bei einfachen Sanitärwannen aus Acryl oder Sanitärwannen aus Naturstein ist die Anordnung eines Metallelementes aus beschichtetem oder unbeschichtetem Blech zum Verdecken der Ablauföffnung zweckmäßig, weil gerade diese Abdeckung besonderen Belastungen ausgesetzt ist.

Aus der DE 71 34 267 U1 ist ein Verschlussstopfen aus Kunststoff bekannt, der dazu vorgesehen ist, mit einem zylindrischen Schaft und Führungsrippen in einer Ablauföffnung längsbeweglich geführt zu werden. Da der eigentliche Körper des Verschlussstopfens sehr billig aus Kunststoff hergestellt ist, ist eine zusätzliche Beschwerung notwendig, um den Verschlussstopfen durch seine Gewichtskraft zuverlässig nach unten drücken zu können. Zu diesem Zweck ist an der Oberseite des Verschlussstopfens eine Gewichtseinlage vorgesehen, die von einer aufgesetzten Kappe abgedeckt ist. Die Befestigung der Kappe kann über einen umgebeutelten Rand der Kappe klemmend erfolgen, wobei die Kappe an ihrem Rand zweckmäßigerweise nur geringfügig über 90° umgebogen wird, damit zwar eine Vorspannung erreicht wird, die Kappe aber weiterhin leicht montiert werden kann. Bei einer klemmenden Befestigung ist kein Klebstoff oder ein Dichtmaterial zur Befestigung notwendig.

Die EP 1 243 709 A2 offenbart eine Sanitäreinrichtung mit einem Ablauf, der auf unterschiedliche Weise abgedeckt sein kann.

Gemäß einer Ausführungsform ist ein Gitter mit innenliegenden Öffnungen als Wassereinlass vorgesehen. Diese Öffnungen sind innerhalb des Gitters vorgesehen.

Auch gemäß der GB 1 591 369 A wird ein Wasserablauf offenbart, der bei einem Abschlusselement vom äußeren Rand nach innen versetzt Durchtrittsöffnungen aufweist.

Die WO 2007/070956 A1 offenbart eine Art Abflussgitter, welches an seinem Rand abgestützt ist. Auch hier verbleibt kein seitlicher Spalt für einen Wasserablauf.

Eine Sanitärwanne mit den eingangs beschriebenen Merkmalen ist aus der DE 10 2005 011 790 B3 bekannt. Gemäß der dort beschriebenen Ausgestaltung ist auf der Ablaufgarnitur ein Deckel vorgesehen, der einen formstabilen Träger sowie eine mit dem Träger fest verbundene dünnwandige Kappe aus Blech aufweist, wobei die Kappe die in der Vertiefung sichtbare Außenfläche des Deckels bildet. Die aus Blech gebildete Kappe ist ausgehend von einer im Wesentlichen ebenen mittleren Fläche des Blechs an ihrem äußeren Rand um 90° umgebogen, wobei sich der üblicherweise aus Kunststoff gebildete Träger bis unmittelbar an den umgebogenen Rand heran erstreckt. Die beschriebene Ausgestaltung hat sich in der Praxis bewährt und zeichnet sich durch ein hochwertiges Erscheinungsbild aus. Insbesondere können die Deckel gemäß den jeweiligen Erfordernissen leicht aus einem vergleichsweise dünnwandigen Blech und einem Träger gebildet werden, wobei dann die gesamte Tragkraft des Deckels sowie die Anschlüsse an die darunter angeordnete Ablaufgarnitur durch den Träger bereitgestellt werden können.

Auch bei einer hohen Widerstandsfähigkeit der dünnwandigen Kappe stellen die umgebogenen Ränder der dünnwandigen Kappe im Hinblick auf etwaige Beschädigungen oder Verunreinigungen eine Schwachstelle dar. Insbesondere besteht an den Rändern des Blechs die Gefahr, dass eine Beschichtung, beispielsweise eine Emaillierung, unter starken mechanischen Beanspruchungen, beispielsweise bei einem Herunterfallen des Deckels, beschädigt werden. Zumindest wenn in einem solchen Fall kein vollständiger Schutz mehr durch die Emaillierung gegeben ist, kann die dünnwandige Kappe an der freigelegten Stelle oxidieren, wodurch das Erscheinungsbild sowie die Langlebigkeit des Deckels beeinträchtigt werden.

Der vorliegenden Erfindung liegt die Aufgabe zugrunde, die genannten Nachteile zu vermeiden und eine möglichst freie Gestaltung des Randes des Metallelementes zu ermöglichen.

Gemäß einer ersten Variante der Erfindung wird die Erfindung dadurch gelöst, dass ausgehend von einer im Wesentlichen ebenen mittleren Fläche des Blechs der äußere Rand um mehr als 95° umgebogen ist, so dass der Rand des Blechs gegenüber dem Rand der von dem Metallelement überdeckten Grundfläche nach innen versetzt angeordnet ist.

Gemäß einer zweiten Variante ist zur Lösung der Aufgabe vorgesehen, dass ausgehend von einer im Wesentlichen ebenen mittleren Fläche des Blechs die Dicke des Blechs an seinem äußeren Rand erhöht ist.

Gemäß einer dritten Variante ist zur Lösung der Aufgabe vorgesehen, dass das Metallelement in an sich bekannter Weise auf einem formstabilen Träger angeordnet ist, wobei jedoch der formstabile Träger einen außenseitigen Steg zur Aufnahme des umgebogenen Randes des Blechs aufweist. Der äußere Rand des Bleches ist so gegenüber Beschädigungen und mechanischen Belastungen auf besonders vorteilhafte Weise geschützt. Zwischen dem äußeren Rand des Blechs und dem Steg kann zusätzlich ein Dicht- und/oder Klebstoff vorgesehen sein, wodurch einerseits die Schutzwirkung verbessert und andererseits ein wasserdichter Verschluss erreicht werden.

Mit allen erfindungsgemäßen Varianten ergibt sich ein deutlich verbesserter Schutz des Randes. Dabei ist zu berücksichtigen, dass gerade an freiliegenden Kanten und Umbiegungen die erhöhte Gefahr von Beschädigungen und Korrosion besteht.

Gemäß der ersten und der zweiten Varianten wird auch vermieden, dass ein schmaler Blechrand vorhanden ist, der für einen Benutzer durch den Spalt für den Wasserablauf sichtbar ist. Bei der dritten Variante bleibt zwar der Randbereich des Bleches zwar noch in einem gewissen Maße sichtbar, wird aber durch den Steg des Trägers zumindest teilweise kaschiert und fällt damit nicht erheblich auf. Gerade bei hohen Metallelementen ist die dritte Variante auch bei hohen Anforderungen an die Gestaltung einsetzbar, weil dann der Rand des Bleches mit dem daran anschließenden Steg des Trägers weit nach unten in den Spalt versetzt angeordnet und damit in einem gewissen Maße abgeschattet ist.

Gemäß der ersten Variante ist der äußere Rand des Blechs um mehr als 95° umgebogen, so dass der Rand des Blechs gegenüber dem Rand der von dem Metallelement überdeckten Grundfläche nach innen versetzt angeordnet ist.

Dadurch, dass der Rand des Blechs nach innen versetzt angeordnet ist, ist dieser in einem gewissen Maße gegen äußere Einflüsse wie Stöße, Schläge oder dergleichen geschützt. Selbst wenn dennoch am Rand des Blechs aufgrund von Beschädigungen Materialveränderungen auftreten, sind diese für einen Benutzer nicht sichtbar, weil der Rand des Blechs von der Oberseite der Sanitärwanne gesehen verdeckt angeordnet ist.

Durch eine Biegung des Randes um mehr als 95° wird auch der Randbereich des Metallelementes auf besonders vorteilhafte Weise weiter verstärkt. Selbst bei einer geringen Materialstärke weist das Metallelement damit an seinem Rand eine hohe Festigkeit auf. Zusätzlich besteht die Möglichkeit aus optischen Gründen unterschiedliche Randgeometrien vorzusehen. Gerade bei großflächigen Abläufen und größeren Spalten für den Wasserablauf kann der Spaltbereich in einem gewissen Maße eingesehen werden. Der Rand des Metallelementes ist damit zumindest teilweise sichtbar. Im Rahmen der Erfindung besteht dabei die Möglichkeit gemäß den optischen Vorgaben den Rand mit einem gleichbleibenden oder einem entlang des Blechverlaufes sich ändernden Radius zu biegen. Insbesondere können auch gerade Zwischenbereiche vorgesehen sein. Vorzugsweise ist der Rand um mehr als 110° umgebogen.

Um beispielsweise den Eindruck eines dicken, massiven Deckels zu erzeugen, kann das Blech ausgehend von der im Wesentlichen ebenen, mittleren Fläche zunächst um etwa 90° umgebogen sein und dann in einen geraden, zylinderförmigen Abschnitt übergehen, bevor mit einer weiteren Biegung mit typischerweise zumindest 10° der äußere Rand des Blechs gegenüber der von dem Metallelement überdeckten Grundfläche nach innen versetzt angeordnet ist.

Gemäß einer alternativen Ausgestaltung ist der Rand bis auf die mittlere Fläche zurückgebogen. Wenn im Rahmen einer solchen Ausgestaltung der Rand flach zurückgefaltet wird, so dass das Blech im Randbereich zweilagig angeordnet ist, wird der Eindruck eines besonders flachen, leichten Deckels erzeugt, wobei durch die doppelte Materialstärke dennoch eine besonders hohe Stabilität vorliegt. Möglich ist es auch, den Rand durch eine Biegung von zumindest etwa 180° einzurollen. Bei einer solchen Ausgestaltung ist der Rand des Blechs besonders gut geschützt.

Da gemäß der beschriebenen Ausgestaltung der Rand des Blechs außerhalb des Sichtbereiches liegt, kann dort auch ein Dicht- und/oder Klebstoff vorgesehen sein. Durch einen Dicht- und/oder Klebstoff wird der Rand des Blechs als mögliche Schwachstellen einerseits mechanisch geschützt und andererseits auch von Feuchtigkeit oder chemischen Substanzen ferngehalten.

Gemäß der zweiten zur Lösung der erfindungsgemäßen Aufgabe vorgesehenen Variante weist das Metallelement aus beschichtetem Blech an seinem äußeren Rand eine erhöhte Dicke, insbesondere eine wulstförmige Verdickung auf, die beispielsweise durch ein Stauchen des Blechs gebildet werden kann. Auch durch die wulstförmige Verdickung, die im Querschnitt insbesondere eine runde oder ovale Form aufweist, kann an dem Rand eine scharfe Kante, die eine erhöhte Anfälligkeit für Beschädigungen aufweist, vermieden werden. Durch die erhöhte Dicke des Blechs wird auch auf besonders vorteilhafte Weise eine mechanische Verstärkung erreicht. Da durch die Verdickung enge Radien vermieden werden, haftet auch eine Beschichtung, beispielsweise eine Emaillierung besser auf dem Blech. Ähnlich wie bei der zuvor beschriebenen ersten Variante kann durch die Ausgestaltung der Verdickung, das heißt die Höhe und Krümmung, auch das optische Erscheinungsbild gemäß den jeweiligen Erfordernissen angepasst werden.

Auch wenn es im Rahmen der Erfindung grundsätzlich möglich ist, das Metallelement aus einem widerstandsfähigen Blech, insbesondere einem Edelstahlblech zu fertigen oder mit einer Lackierung zu versehen, ist das Blech vorzugsweise mit einer Emaillierung beschichtet. Wenn dann auch der Wannenboden aus Stahl-Emaille gebildet ist, sind der Wannenboden und das in der Vertiefung an den Wannenboden anschließende Metallelement aus dem gleichen Material, wodurch nicht nur optisch sondern haptisch weitestgehende Übereinstimmungen erreicht werden.

Gemäß einer bevorzugten Ausgestaltung der Erfindung ist das Metallelement auf einem Träger angeordnet, mit dem das Metallelement auf eine Ablaufgarnitur aufgesetzt ist. Je nach Ausgestaltung der Sanitärwanne als Dusch- oder Badewanne kann die Ablaufgarnitur mit oder ohne einen Ventilkegel zum Verschluss des Ablaufes versehen sein.

Das Metallelement kann mit dem formstabilen Träger verklebt sein. Wenn gemäß einer bevorzugten Ausgestaltung der Erfindung der Rand des Blechs um mehr als 90° umgebogen ist, kann im Bereich des umgebogenen Randes eine um den Umfang geschlossene Klebstoffraupe an dem Träger vorgesehen sein, welche den Rand des Blechs abdeckt und das Metallelement mit dem Träger verbindet. Im Rahmen einer solchen Ausgestaltung wird ein optimaler Schutz und eine gute Befestigung des Metallelementes erreicht. Zusätzlich oder alternativ kann eine Verklebung des Metallelementes mit dem Träger auch in einem mittleren Bereich erfolgen. Aus Kostengründen ist der Träger vorzugsweise aus Kunststoff gebildet und kann beispielsweise in der Serienfertigung durch Spritzgießen gebildet sein.

Um einerseits den mittleren Bereich des Metallelementes abstützen zu können und andererseits den umgebogenen oder mit einer Verdickung versehenen Rand des Blechs aufzunehmen, kann der Träger einen außenseitigen Steg zur Aufnahme des Randes des Blechs aufweisen. Der Steg verläuft vorzugsweise ohne Unterbrechung um den gesamten Umfang, um wie zuvor beschrieben die Anordnung einer durchgehenden Klebstoffraupe zu ermöglichen.

Der Einsatz eines Trägers ermöglicht nicht nur die Verwendung eines vergleichsweise dünnen Blechs, sondern auch einen einfachen Anschluss an die Ablaufgarnitur. So kann der Träger an der dem Metallelement gegenüberliegenden Seite Abstandselemente und/oder Formschlusselemente zur Anordnung auf der Ablaufgarnitur aufweisen.

Wie bereits eingangs beschrieben, ist im Rahmen der vorliegenden Erfindung eine Ausgestaltung bevorzugt, bei der das Metallelement mit einem umfangseitigen Abstandspalt für den Wasserablauf so in die Vertiefung eingesetzt ist, dass das Metallelement flächenbündig an den die Vertiefung umgebenden Bereich des Wannenbodens angrenzt.

Die Erfindung wird im Folgenden anhand einer lediglich ein Ausführungsbeispiel darstellenden Zeichnung erläutert. Es zeigen schematisch:
- **Fig. 1**: eine Duschwanne mit einem flächenbündig integrierten Ablauf,
- **Fig. 2**: ein auf einem Träger angeordnetes Metallelement, welches über einer Ablauföffnung angeordnet ist,
- **Fig. 3a-3d**: alternative Ausgestaltungen des Metallelementes gemäß der Fig. 2,
- **Fig. 4a**: ein Metallelement und ein Träger vor der Verbindung durch Klebstoff,
- **Fig. 4b**: die Teile gemäß der Fig. 4a nach ihrer Verbindung,
- **Fig. 5**: den mit Klebstoff versehenen Träger gemäß der Fig. 4a in einer Draufsicht,
- **Fig. 6**: die Detailansicht einer erfindungsgemäßen Ablaufanordnung an einer Badewanne,
- **Fig. 7 bis 9**: weitere alternative Ausgestaltungen des Metallelementes.

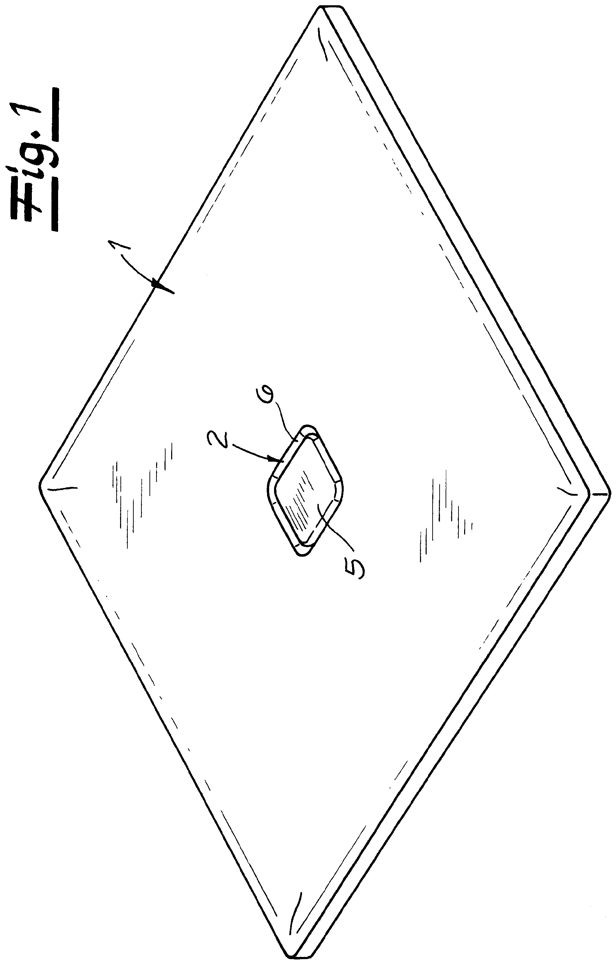

Die Fig. 1 zeigt exemplarisch eine flache Duschwanne mit einem Wannenboden 1, der in einer Vertiefung 2 eine Ablauföffnung 3 mit einer unterseitig an die Ablauföffnung 3 angeschlossenen Ablaufgarnitur 4 aufweist. In der Fig. 1 ist die Ablauföffnung 3 mit der Ablaufgarnitur 4 durch ein darüber angeordnetes Metallelement 5 aus emailliertem Blech verdeckt, wobei das Metallelement 5 eine an die Vertiefung 2 angepasste Form aufweist und wobei zwischen dem Metallelement 5 und dem Wannenboden 1 ein Spalt 6 für den Wasserablauf verbleibt.

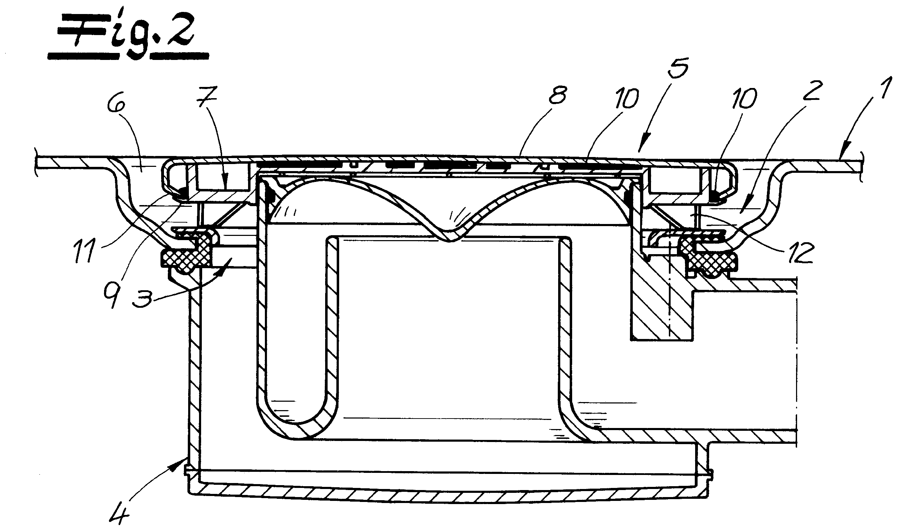

Wie auch insbesondere der Fig. 2 zu entnehmen ist, ist das Metallelement 5 als sichtbare Abdeckung vorzugsweise flächenbündig mit dem an der Vertiefung 2 angrenzenden Bereich des Wannenbodens 1, so dass abgesehen von dem Spalt 6 eine durchgehende Fläche vorliegt. Das Metallelement 5 ist üblicherweise leicht zu seinem Rand hin gekrümmt, um einen Ablauf von Wasser zu gewährleisten. Diese leichte Krümmung ist aber kaum wahrzunehmen.

Die Fig. 2 zeigt in einer Schnittdarstellung den Ablaufbereich der Duschwanne gemäß der Fig. 1 in einer Detailansicht.

Der Fig. 2 ist zu entnehmen, dass das Metallelement 5 aus Blech gebildet ist, wobei ausgehend von einer im Wesentlichen ebenen mittleren Fläche 8 des Blechs der äußere Rand um mehr als 90° umgebogen ist, so dass der Rand des Blechs gegenüber dem Rand der von dem Metallelement 5 überdeckten Grundfläche nach innen versetzt angeordnet ist. In dem dargestellten Ausführungsbeispiel der Fig. 2 ist ausgehend von der mittleren Fläche 8 zunächst ein Bogen von etwa 90° vorgesehen, so dass an dem Rand des Metallelementes 5 ein zylindrischer Abschnitt gebildet ist, bevor das Blech an einem weiteren Bogen weiter nach innen gezogen ist.

Dadurch, dass der Rand des Blechs nach innen umgebogen ist, ist dieser Rand einerseits vor äußeren Einflüssen in einem gewissen Maße geschützt und andererseits auch für einen Benutzer nicht sichtbar, so dass etwaige Beeinträchtigungen an dem umgebogenen Rand das Erscheinungsbild der Sanitärwanne nicht beeinträchtigen können.

Der Fig. 2 ist des Weiteren zu entnehmen, dass der Träger 7 einen außenseitigen Steg 9 zur Aufnahme des Randes des Blechs aufweist.

Die Verbindung des Metallelementes 5 mit dem Träger 7 kann durch Klebstoff 10 erfolgen, der besonders bevorzugt im Bereich des Steges 9 vorgesehen ist. Durch den Klebstoff 10 wird dann nämlich auch die Stirnfläche 11 des Blechs eingeschlossen, so dass diese Stirnfläche 11 vollständig geschützt ist. Vor diesem Hintergrund ist der Klebstoff 10 zweckmäßigerweise an dem gesamten Umfang des Trägers 7 vorzusehen. Des Weiteren ist auch die mittlere Fläche 8 des Metallelementes 5 durch Klebstoff 10 mit dem Träger 7 verklebt.

Die Fig. 2 zeigt die Anordnung des Metallelementes 5 mit dem damit verklebten Träger 7 auf einer Ablaufgarnitur 4. Die dargestellte Ablaufgarnitur ist im Detail in der DE 10 2009 023 015 A1 beschrieben und eignet sich im besonderen Maße für flache Duschwannen, weil anschließend an einen Siphonbereich ein Überlaufabschnitt sich in vertikaler Richtung bis unmittelbar unter den Träger 7 erstreckt.

Der Fig. 2 ist des Weiteren zu entnehmen, dass der Träger 7 Abstandselemente 12 aufweist, die einerseits den Träger 7 mit dem darauf angeordneten Metallelement 5 abstützen und andererseits das Durchströmen von abfließendem Wasser ermöglichen.

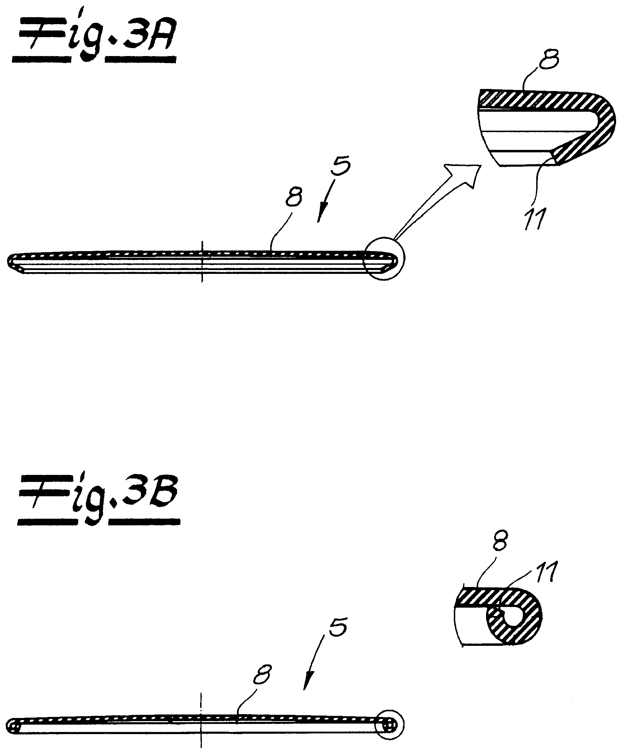

Die Fig. 3a bis 3d zeigen alternative Ausgestaltungen des Metallelementes 5. So zeigt die Fig. 3a eine Ausgestaltung, bei der der Rand des Metallelementes 5 aus Blech in einem durchgehenden Bogen umgebogen ist. Gegenüber dem in der Fig. 2 dargestellten Metallelement wird der Eindruck einer flacheren Bauhöhe erzeugt.

Gemäß der Fig. 3b ist der Rand so weit umgebogen, dass die Stirnfläche 11 an der Unterseite der mittleren Fläche 8 aufliegen kann. Im Rahmen einer solchen Ausgestaltung wird eine besonders hohe Stabilität erreicht, wobei der Rand eine sehr gleichmäßige Krümmung aufweist.

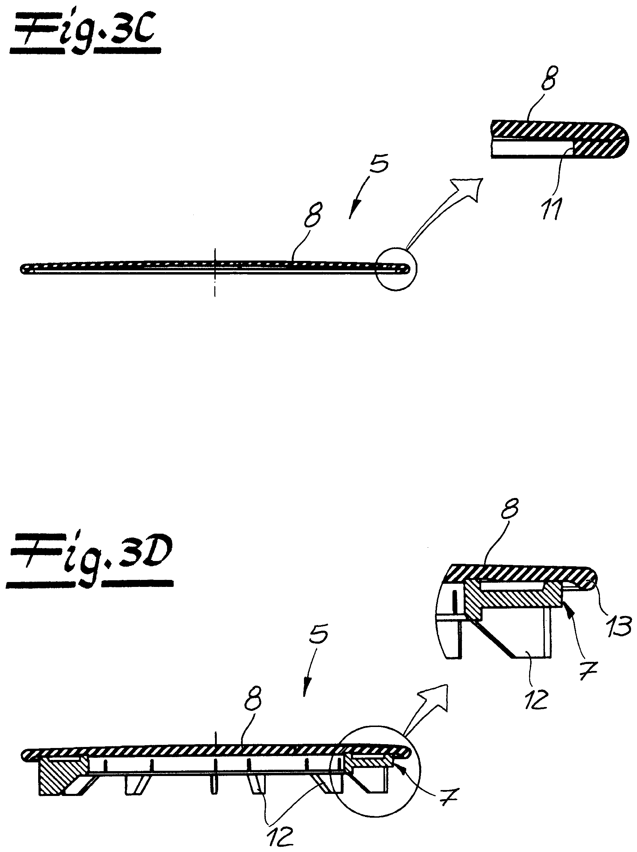

Gemäß der Fig. 3c ist das Blech an dem Rand in einem engen Bogen auf sich selbst zurückgefaltet. Das Blech liegt damit im Randbereich in zwei Lagen vor.

Die Fig. 3d zeigt schließlich eine alternative Ausgestaltung des Metallelementes 5, wobei anstelle einer Umbiegung an dem Rand eine Verdickung 13 vorgesehen ist, die beispielsweise durch ein Stauchen erreicht werden kann. Auch im Rahmen einer solchen Ausgestaltung ergibt sich der Vorteil, dass keine scharfen Stirnflächen, die gegenüber Beschädigungen anfällig sind, freiliegen bzw. frei sichtbar sind.

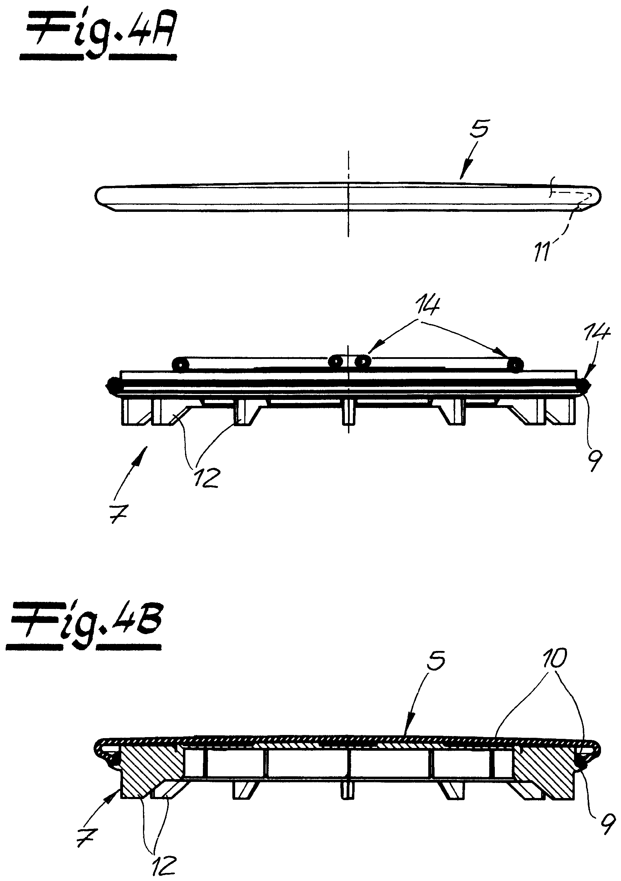

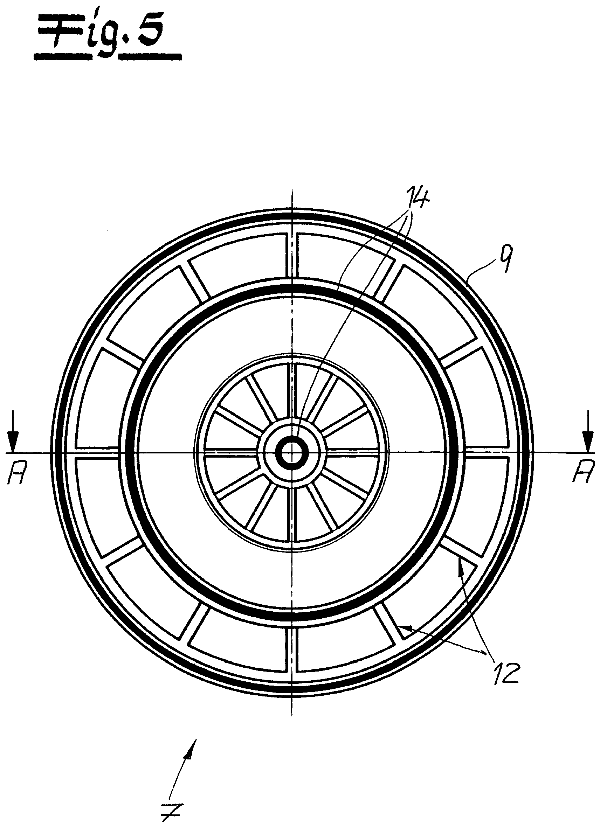

Die Fig. 4a und 4b zeigen exemplarisch ein Metallelement 5 sowie einen Träger 7 vor sowie nach ihrer Verbindung. Zusätzlich zeigt die Fig. 5 eine Draufsicht auf den Träger vor der Verbindung, wobei durch die Linie A-A der Schnitt angedeutet ist, der in der Fig. 4b dargestellt ist.

Um das Metallelement 5 aus Blech mit dem Träger 7 zu verbinden, werden zunächst aus Klebstoff 10 an dem äußeren Steg 9 des Trägers 7 sowie an der mittleren Fläche 8 umlaufende Klebstoffraupen 14 gebildet. Der Klebstoff 10 soll eine permanente Fixierung des Metallelementes 5 gewährleisten und kann auch noch eine gewisse Dauerelastizität nach seinem Aushärten aufweisen, um etwaige Materialspannungen oder dergleichen ausgleichen zu können. Bei dem Auflegen des Metallelementes 5 auf den mit Klebstoffraupen 14 versehenen Träger 7 werden die Klebstoffraupen 14 zusammengedrückt, wodurch sich der Klebstoff 10 verteilt. Insbesondere wird die Stirnfläche 11 des Metallelementes 5 vollständig in den Klebstoff 10 eingebettet und ist damit optimal geschützt. Durch den um den Umfang umlaufenden Abschluss durch den Klebstoff 10 an dem Steg 9 wird auch verhindert, dass Wasser oder andere Verunreinigungen in dem Bereich zwischen dem Träger 7 und dem Metallelement 5 gelangen können.

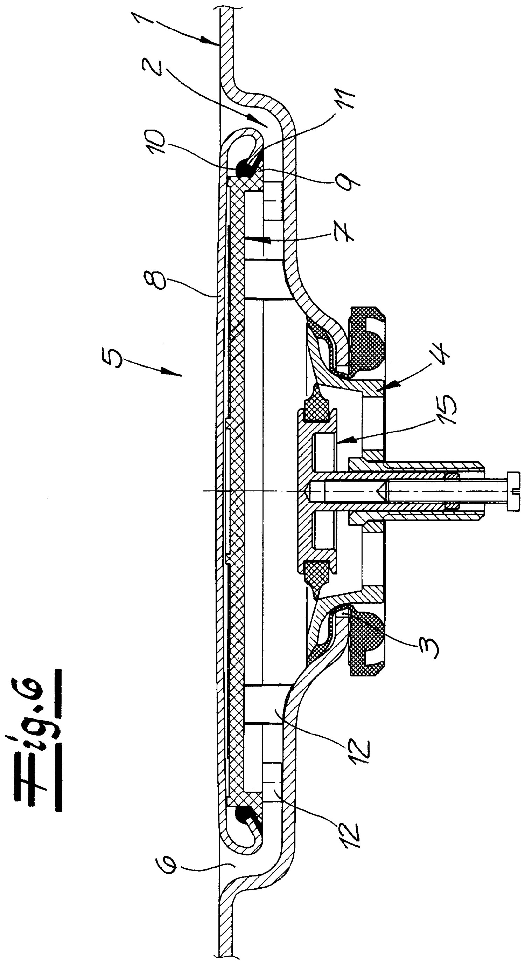

Die Fig. 6 zeigt eine Variante einer Sanitärwanne, wobei ähnlich wie zuvor ein Metallelement 5 auf einem Träger 7 angeordnet und dort dauerhaft mit Klebstoff 10 fixiert ist. Bei der dargestellten Ausführung ist jedoch in der Ablaufgarnitur 4 ein Ventilkegel 15 vorgesehen, der dazu vorgesehen ist, den Ablauf zu öffnen und zu schließen. Eine solche Ausgestaltung wird üblicherweise für Badewannen eingesetzt, bei denen einerseits der Ablauf verschlossen werden musste und andererseits besonders hohe Ablaufleistungen wie bei einer Duschwanne üblicherweise nicht notwendig sind.

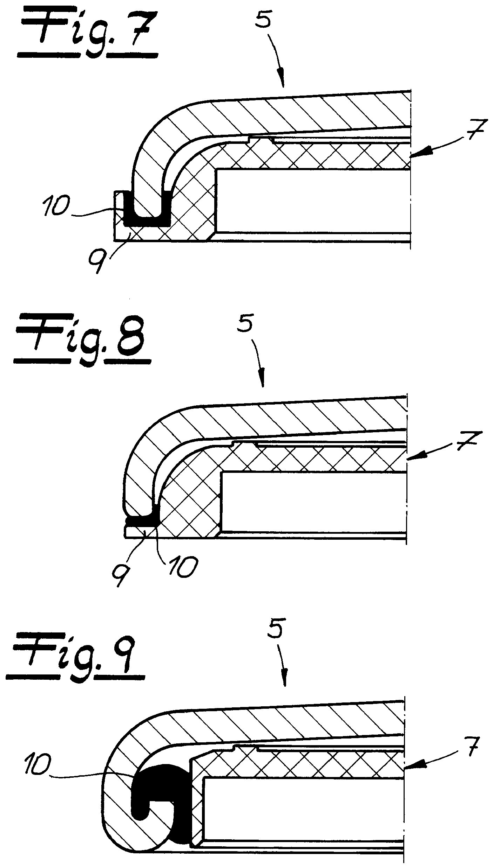

Die Fig. 7 bis 9 zeigen Ausgestaltungen, bei denen das Metallelement 5 auf einem Träger 7 angeordnet ist. Gemäß der Fig. 7 und der Fig. 8 ist der äußere Rand des Metallelementes 5 um etwa 90° umgebogen. Ein Schutz dieses Randes wird aber dadurch erreicht, dass der Träger 7 einen außenseitigen Steg 9 aufweist, der den Rand des Metallelementes 5 gegen Stöße oder andere mechanische Beeinträchtigungen schützt. Ein besonders guter Schutz kann erreicht werden, wenn der äußere Steg 9 den Rand umgreift, wie dies in der Fig. 7 dargestellt ist. Es ergibt sich dann aber der Nachteil, dass der Steg 9 durch den Spalt 6 für den Wasserablauf sichtbar ist. Gerade bei einem vergleichsweise hohen Metallelement 5 kann diese Einschränkung aber hingenommen werden. Wie im Zusammenhang mit der Fig. 2 beschrieben, ist auch hier ein Klebstoff 10 vorgesehen, der sowohl eine dichte Versiegelung als auch einen verbesserten Schutz des Randes des Blechs bewirkt.

Das in der Fig. 9 dargestellte Metallelement 5 entspricht im Wesentlichen der Ausgestaltung gemäß der Fig. 3b, wobei jedoch ausgehend von der mittleren Fläche 9 des Metallelementes 5 zunächst ein Bogen von etwas 90° und dann ein im Wesentlichen zylindrischer Abschnitt vorgesehen ist, bevor der Rand des Bleches weiter eingerollt ist. Auch hier sind eine Versiegelung und eine Befestigung mittels Klebstoff 10 vorgesehen.

## Patentansprüche

1. Sanitärwanne mit einer in einer Vertiefung (2) des Wannenbodens (1) angeordneten Ablauföffnung (3), einer unterseitig an die Ablauföffnung (3) angeschlossenen Ablaufgarnitur (4) und einem über der Ablauföffnung (3) angeordneten Metallelement (5) aus beschichtetem oder unbeschichtetem Blech, wobei das Metallelement (5) eine an die Vertiefung (2) angepasste Form aufweist, wobei das Metallelement (5) auf einem Träger (7) angeordnet und damit auf die Ablaufgarnitur (4) aufgesetzt ist, wobei das Metallelement (5) mit dem Träger (7) verklebt ist und wobei zwischen dem Metallelement (5) und dem Wannenboden (1) ein Spalt (6) für den Wasserabfluss verbleibt, **dadurch gekennzeichnet, dass** ausgehend von einer im Wesentlichen ebenen mittleren Fläche (8) des Blechs der äußere Rand um mehr als 95° umgebogen ist, so dass der Rand des Blechs gegenüber dem Rand der von dem Metallelement (5) überdeckten Grundfläche nach innen versetzt angeordnet ist.

2. Sanitärwanne nach Anspruch 1, **dadurch gekennzeichnet, dass** der Rand des Blechs von einem Dicht- und/oder Klebstoff (10) abgedeckt ist.

3. Sanitärwanne nach Anspruch 1 oder 2, **dadurch gekennzeichnet, dass** der Rand ausgehend von der im Wesentlichen ebenen mittleren Fläche (8) um mehr als 110° und vorzugsweise weniger als 180° umgebogen ist.

4. Sanitärwanne mit einer in einer Vertiefung (2) des Wannenbodens (1) angeordneten Ablauföffnung (3), einer unterseitig an die Ablauföffnung (3) angeschlossenen Ablaufgarnitur (4) und einem über der Ablauföffnung (3) angeordneten Metallelement (5) aus beschichtetem Blech, wobei das Metallelement (5) eine an die Vertiefung (2) angepasste Form aufweist und wobei zwischen dem Metallelement (5) und dem Wannenboden (1) ein Spalt (6) für den Wasserablauf verbleibt, **dadurch gekennzeichnet, dass** ausgehend von einer im Wesentlichen ebenen mittleren Fläche (8) des Blechs die Dicke des Blechs an seinem äußeren Rand erhöht ist.

5. Sanitärwanne nach Anspruch 4, **dadurch gekennzeichnet, dass** das Blech an seinem Rand eine wulstförmige Verdickung (13) aufweist.

6. Sanitärwanne nach Anspruch 5, **dadurch gekennzeichnet, dass** die Verdickung (13) durch eine Stauchung des Blechs gebildet ist.

7. Sanitärwanne nach einem der Ansprüche 1 bis 6, **dadurch gekennzeichnet, dass** das Metallelement (5) auf einem formstabilen Träger (7) angeordnet ist.

8. Sanitärwanne nach den Ansprüchen 3 und 7, **dadurch gekennzeichnet, dass** das Metallelement (5) durch eine um den Umfang geschlossene Klebstoffraupe (14) mit dem Träger (7) verbunden ist, wobei die Klebstoffraupe (14) den Rand des Blechs abgedeckt.

9. Sanitärwanne nach Anspruch 7 oder 8, **dadurch gekennzeichnet, dass** der Träger (7) einen außenseitigen Steg (9) zur Aufnahme des Randes des Blechs aufweist.

10. Sanitärwanne mit einer in einer Vertiefung (2) des Wannenbodens (1) angeordneten Ablauföffnung (3), eine unterseitig an die Ablauföffnung (3) angeschlossenen Ablaufgarnitur (4) und einem über der Ablauföffnung (3) angeordneten Metallelement (5) aus beschichtetem oder unbeschichtetem Blech, wobei das Metallelement (5) eine an die Vertiefung (2) angepasste Form aufweist, wobei zwischen dem Metallelement (5) und dem Wannenboden (1) ein Spalt (6) für den Wasserablauf verbleibt und wobei das Metallelement (5) auf einem formstabilen Träger (7) angeordnet ist, **dadurch gekennzeichnet, dass** der Träger (7) einen außenseitigen Steg (9) zur Aufnahme des umgebogenen Randes des Blechs aufweist.

11. Sanitärwanne nach Anspruch 10, **dadurch gekennzeichnet, dass** zwischen dem außenseitigen Steg (9) und dem Rand des Blechs Dicht- und/oder Klebstoff (10) vorgesehen ist, welcher den Rand des Bleches abdeckt.

12. Sanitärwanne nach einem der Ansprüche 7 bis 11, **dadurch gekennzeichnet, dass** der Träger (7) an der dem Metallelement (5) gegenüberliegenden Seite Abstandselemente (12) und/oder Formschlusselemente zur Anordnung auf der Ablaufgarnitur (4) aufweist.

13. Sanitärwanne nach einem der Ansprüche 1 bis 12, **dadurch gekennzeichnet, dass** das Blech mit einer Emaillierung beschichtet ist.

14. Sanitärwanne nach einem der Ansprüche 1 bis 13, **dadurch gekennzeichnet, dass** das Metallelement (5) mit einem umfangseitigen Abstandsspalt für den Wasserabschluss so in die Vertiefung eingesetzt ist, dass das Metallelement (5) flächenbündig an den die Vertiefung (2) umgebenden Bereich des Wannenbodens (1) angrenzt.

15. Sanitärwanne nach einem der Ansprüche 1 bis 14, **dadurch gekennzeichnet, dass** der Wannenboden (1) und das Metallelement (5) aus demselben Material bestehen.

## Claims

1. A sanitary tub with a drain opening (3) arranged in a recess (2) of the tub floor (1), a drainage mounting (4) connected underneath to the drain opening (3) and a metal element (5) made of a coated or uncoated sheet metal arranged above the drain opening (3), wherein the metal element (5) has a shape which matches the recess (2), wherein the metal element (5) is arranged on a support (7) and therefore sits on the drainage mounting (4), wherein the metal element (5) is glued to the support (7) and wherein a gap (6) for the water drainage remains between the metal element (5) and the tub floor (1), **characterised in that**, proceeding from an essentially flat central area (8) of the sheet metal, the outer edge is bent over more than 95°, so that the edge of the sheet metal is arranged offset inwards with respect to the edge of the base area covered by the metal element (5).

2. The sanitary tub according to claim 1, **characterised in that** the edge of the sheet metal is covered by a sealant and/or adhesive (10).

3. The sanitary tub according to claim 1 or 2, **characterised in that** the edge, proceeding from the essentially flat central area (8), is bent over by more than 110° and preferably less than 180°.

4. The sanitary tub with a drain opening (3) arranged in a recess (2) of the tub floor (1), a drainage mounting (4) connected underneath to the drain opening (3) and a metal element (5) made of a coated sheet metal arranged above the drain opening (3), wherein the metal element (5) has a shape which matches the recess (2) and wherein a gap (6) for the water drainage remains between the metal element (5) and the tub floor (1), **characterised in that**, proceeding from an essentially flat central area (8) of the sheet metal, the thickness of the sheet metal is increased at its outer edge.

5. The sanitary tub according to claim 4, **characterised in that** the sheet metal has a bulge-shaped thickening (13) at its edge.

6. The sanitary tub according to claim 5, **characterised in that** the thickening (13) is formed by upsetting of the sheet metal.

7. The sanitary tub according to any one of claims 1 to 6, **characterised in that** the metal element (5) is arranged on a dimensionally stable support (7).

8. The sanitary tub according to claims 3 and 7, **characterised in that** the metal element (5) is connected to the support (7) by an adhesive bead closed around the periphery, wherein the adhesive bead (14) covers the edge of the sheet metal.

9. The sanitary tub according to claim 7 or 8, **characterised in that** the support (7) has an outer web (9) for receiving the edge of the sheet metal.

10. The sanitary tub with a drain opening (3) arranged in a recess (2) of the tub floor (1), a drainage mounting (4) connected underneath to the drain opening (3) and a metal element (5) made of a coated or uncoated sheet metal arranged above a drain opening (3), wherein the metal element (5) has a shape which matches the recess (2), wherein a gap (6) for the water drainage remains between the metal element (5) and the tub floor (1) and wherein the metal element (5) is arranged on a dimensionally stable support (7), **characterised in that** the support (7) has an outer web (9) for receiving the bent-over edge of the sheet metal.

11. The sanitary tub according to claim 10, **characterised in that** sealant and/or adhesive (10) is provided between the outer web (9) and the edge of the sheet metal and covers the edge of the sheet metal.

12. The sanitary tub according to any one of claims 7 to 11, **characterised in that** the support (7) comprises spacer elements (12) and/or form-fit elements on the side lying opposite the metal element (5) for the arrangement on the drain mounting (4).

13. The sanitary tub according to any one of claims 1 to 12, **characterised in that** the sheet metal is provided with an enamel coating.

14. The sanitary tub according to any one of claims 1 to 13, **characterised in that** the metal element (5) is inserted into the recess with a peripheral spacing gap for the water drainage, in such a way that the metal element (5) lies flush against the region of the tub floor (1) surrounding the recess (2).

15. The sanitary tub according to any one of claims 1 to 14, **characterised in that** the tub floor (1) and the metal element (5) are made of the same material.

## Revendications

1. Baignoire avec une ouverture d'évacuation (3) disposée dans une cavité (2) du fond de cuve (1), une garniture d'évacuation (4) raccordée sur la face inférieure à l'ouverture d'évacuation (3) et un élément métallique (5) disposé sur l'ouverture d'évacuation (3) en tôle revêtue ou non revêtue, sachant que l'élément métallique (5) comporte une forme adaptée à la cavité (2), sachant que l'élément métallique (5) est disposé sur un support (7) et est de ce fait posé sur la garniture d'évacuation (4), sachant que l'élément métallique (5) est collé au support (7) et sachant qu'entre l'élément métallique (5) et le fond de cuve (1) il reste un espacement (6) pour l'écoulement de l'eau, **caractérisée en ce que** partant d'une surface (8) pour l'essentiel centrale plane de la tôle, le bord extérieur est replié de plus de 95° de telle manière que le bord de la tôle est disposé déplacé vers l'intérieur par rapport au bord de la surface de base recouverte par l'élément métallique (5).

2. Baignoire selon la revendication 1, **caractérisée en ce que** le bord de la tôle est recouvert d'un matériau d'étanchéité et/ou adhésif (10).

3. Baignoire selon la revendication 1 ou 2, **caractérisée en ce que** le bord partant de la surface (8) pour l'essentiel centrale plane est replié de plus de 110° et de préférence de moins de 180°.

4. Baignoire avec une ouverture d'évacuation (3) disposée dans une cavité (2) du fond de cuve (1), une garniture d'évacuation (4) raccordée sur la face inférieure à l'ouverture d'évacuation (3) et un élément métallique (5) disposé sur l'ouverture d'évacuation (3) en tôle revêtue, sachant que l'élément métallique (5) comporte une forme adaptée à la cavité (2) et sachant qu'entre l'élément métallique (5) et le fond de cuve (1) il reste un espacement (6) pour l'évacuation de l'eau, **caractérisée en ce que** partant d'une surface (8) pour l'essentiel centrale plane de la tôle, l'épaisseur de la tôle est augmentée sur son bord extérieur.

5. Baignoire selon la revendication 4, **caractérisée en ce que** la tôle comporte sur son bord un épaississement en forme de bourrelet (13).

6. Baignoire selon la revendication 5, **caractérisée en ce que** l'épaississement (13) est formé par un refoulement de la tôle.

7. Baignoire selon l'une quelconque des revendications de 1 à 6, **caractérisée en ce que** l'élément métallique (5) est disposé sur un support (7) de forme stable.

8. Baignoire selon l'une quelconque des revendications de 3 et 7, **caractérisée en ce que** l'élément métallique (5) est relié au support (7) par un cordon de colle fermé autour de la périphérie, sachant que le cordon de colle (14) recouvre le bord de la tôle.

9. Baignoire selon la revendication 7 ou 8, **caractérisée en ce que** le support (7) comporte une nervure (9) extérieure pour loger le bord de la tôle.

10. Baignoire avec une ouverture d'évacuation (3) disposée dans une cavité (2) du fond de cuve (1), une garniture d'évacuation (4) raccordée sur la face inférieure à l'ouverture d'évacuation (3) et un élément métallique (5) disposé sur l'ouverture d'évacuation (3) en tôle revêtue ou non revêtue, sachant que l'élément métallique (5) comporte une forme adaptée à la cavité (2), sachant qu'entre l'élément métallique (5) et le fond de cuve (1) il reste un espacement (6) pour l'évacuation de l'eau et sachant que l'élément métallique (5) est disposé sur un support (7) stable de forme stable, **caractérisé en ce que** le support (7) comporte une nervure (9) extérieure pour loger le bord replié de la tôle.

11. Baignoire selon la revendication 10, **caractérisée en ce qu'**entre la nervure (9) extérieure et le bord de la tôle, est prévu un matériau d'étanchéité et/ou adhésif (10), lequel recouvre le bord de la tôle.

12. Baignoire selon l'une quelconque des revendications 7 à 11, **caractérisée en ce que** le support (7) comporte sur la face opposée à l'élément métallique (5) des éléments d'espacement (12) et/ou des éléments à conformité de forme pour mise en place sur la garniture d'évacuation (4).

13. Baignoire selon l'une quelconque des revendications de 1 à 12, **caractérisée en ce que** la tôle est revêtue d'un émaillage.

14. Baignoire selon l'une quelconque des revendications de 1 à 13, **caractérisée en ce que** l'élément métallique (5) est inséré dans la cavité avec un intervalle de dégagement périphérique pour l'écoulement de l'eau de telle manière que l'élément métallique (5) touche à fleur de surface la zone du fond de cuve (1) entourant la cavité (2).

15. Baignoire selon l'une quelconque des revendications de 1 à 14, **caractérisée en ce que** le fond de cuve (1) et l'élément métallique (5) sont composés du même matériau.
